Europäisches Patentamt

European Patent Office

Office européen des brevets

(19)

(11) **EP 1 136 854 A2**

(12) ## EUROPEAN PATENT APPLICATION

(43) Date of publication:
**26.09.2001  Bulletin 2001/39**

(51) Int Cl.$^7$: **G02B 6/24**, G02B 6/26

(21) Application number: **01101106.1**

(22) Date of filing: **18.01.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **23.02.2000  JP 2000045886**

(71) Applicant: **Sumitomo Electric Industries, Ltd. Osaka (JP)**

(72) Inventors:
• **Iwata, Noriko, Sumitomo Electric Ind., Ltd. Yokohama-shi, Kanagawa (JP)**
• **Okamoto, Kazuhiro, Sumitomo Electric Ind., Ltd. Yokohama-shi, Kanagawa (JP)**

(74) Representative: **HOFFMANN - EITLE Patent- und Rechtsanwälte Arabellastrasse 4 81925 München (DE)**

(54) **Non-reflection optical fiber termination and method of manufacturing the same**

(57)     An optical fiber 2 is spliced to an optical fiber 1 in a state that those optical fibers are axially shifted away from each other by an offset quantity D. With this splicing of the optical fibers, a coupling loss arises at a fusion splicing part 1c. A plurality of fusion splicing parts 1c are provided. The terminal part of the final optical fiber of serially spliced optical fibers is a non-reflection treating part 10. Light propagating through the optical fiber 1 is attenuated at the fusion splicing part, whereby non-reflection of light is realized. The back reflection light is also attenuated at the fusion splicing part, thereby reducing the amount of the back reflection light traveling back to the core 1a of the optical fiber 1.

# FIG. 1

EP 1 136 854 A2

**Description**

BACKGROUND OF THE INVENTION

1. Field of the Invention

The present invention relates to a non-reflection optical fiber termination and a method of manufacturing the non-reflection optical fiber termination for suppressing light reflection at the terminal part of an optical fiber.

2. Description of the Related Art

In recent optical communications, optical power of light handled is large. To cope with this, minimization of the return light is required in the non-reflection optical fiber termination, e.g., the non-reflection termination of an optical fiber to be coupled to a coupler used for an optical amplifier, for example. There are various non-reflection treatment techniques to terminate the terminal part of the optical fiber so that no reflection of light occurs thereat. Examples of those techniques are oblique polishing, spherical surface forming polishing, and covering by apolymer, phosphorus, nickel or the like. A further example uses light-absorbing material.

When only the non-reflection treatment techniques of the terminal part of the optical fiber is used, it is difficult to secure a large reflection attenuation quantity of 70dB or greater, however.

SUMMARY OF THE INVENTION

Accordingly, the present invention has an object to provide a non-reflection optical fiber termination and a method of manufacturing the non-reflection optical fiber termination which has a large reflection attenuation quantity.

The object can be achieved by a non-reflection optical fiber termination, according to a first aspect of the present invention, comprising: a first optical fiber; a second optical fiber coupled to an end portion of the first fiber at one end portion, and non-reflection-treated at the other end portion; and a fused splicing part where the end portion of the first optical fiber and the one end portion of the second optical fiber are fusion spliced together so as to substantially have a coupling loss.

In the non-reflection optical fiber termination, it is preferable that in the fusion splicing part, the first and second optical fiber are fusion spliced in a state that a core axis of the first optical fiber is shifted away from that of the second optical fiber.

In the non-reflection optical fiber termination, anoffset quantity between the core axes of the first and second optical fibers may be not less than 3/4 times a mode field diameter.

Further, in the above-mentioned non-reflection optical fiber termination, it is preferable that in the fusion splicing part, the first and second optical fibers are different in core diameter.

Moreover, in the non-reflection optical fiber termination, it is also preferable that in the fusion splicing part, one of the first and second optical fibers is expanded in core diameter.

In any of the non-reflection optical fiber terminations, it is preferable that the second optical fiber is an optical fiber (referred to as a third optical fiber) configured to have substantially a transmission loss.

In the last-mentioned non-reflection optical fiber termination, the third optical fiber may be an optical fiber not including a core.

In the last-mentioned non-reflection optical fiber termination, the third optical fiber may be also an optical fiber which greatly attenuates optical power of light propagating therethrough.

The object can be also achieved by a non-reflection optical fiber termination, according to a second aspect of the present invention, comprising: a first optical fiber; a second optical fiber having substantially a transmission loss, the second optical fiber coupled to an end portion of the first fiber at one end portion and non-reflection-treated at the other end portion; and a fused splicing part where the end portion of the first optical fiber and the one end portion of the second optical fiber are fusion spliced together.

In the non-reflection optical fiber termination, it is preferable that the second optical fiber is an optical fiber which greatly attenuates optical power of light propagating therethrough.

In the non-reflection optical fiber termination, the optical fiber to be terminated with no reflection and having substantially a transmission loss may be an optical fiber not including a core.

Further, the object can be achieved by a method of manufacturing a non-reflection optical fiber termination, according to a third aspect of the present invention, comprising: fusion splicing a first optical fiber and a second optical fiber together so as to substantially have a coupling loss; and non-reflection treating the second optical fiber.

The above-mentioned object can be also achieved by a method of manufacturing a non-reflection optical fiber termination, according to a fourth aspect of the present invention, comprising: fusion splicing a first optical fiber and a second optical fiber together; and non-reflection treating the second optical fiber.

BRIEF DESCRIPTION OF THE DRAWINGS

Fig. 1 is a diagram showing a first embodiment of a non-reflection optical fiber termination according to the present invention;
Fig. 2 is a diagram showing a second embodiment of a non-reflection optical fiber termination according to the present invention;
Fig. 3 is a diagram useful in explaining a ring-core optical fiber;
Figs. 4A-B are respectively diagrams showing a third embodiment of a non-reflection optical fiber termination according to the present invention;
Fig. 5 is a diagram showing a fourth embodiment of a non-reflection optical fiber termination according to the present invention; and
Fig. 6 is a diagram showing a fifth embodiment of a non-reflection optical fiber termination according to the present invention.

## DETAILED DESCRIPTION OF THE PREFERRED EMBODIMENT

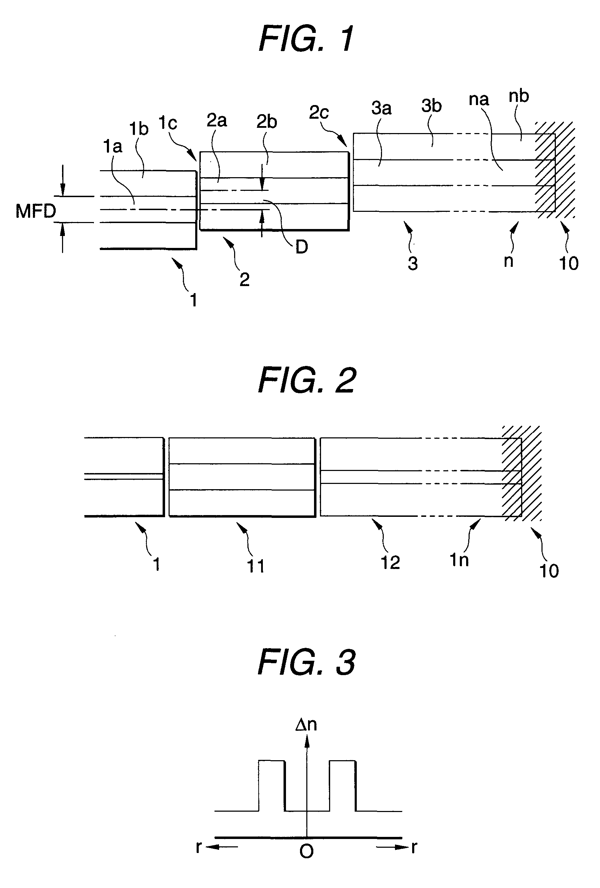

Fig. 1 is a diagram showing a first embodiment of a non-reflection optical fiber termination according to the present invention. In the figure, reference numerals 1, 2, 3, ... , n are optical fibers; 1a, 2a, 3a, .. na are cores; 1b, 2b, 3b, ..., nb are clad layers; 1c, 2c, ... are fusion splicing parts; and 10 is a non-reflection treating parts.
In the embodiment, an optical fiber 1 is treated for non-reflection. In the related art, when an optical fiber 1 to be so terminated is terminated with no reflection, the terminal part of the optical fiber 1 is treated by a non-reflection terminating technique appropriately selected from among those techniques as mentioned above. In the embodiment, an optical fiber 2 is joined to the optical fiber 1 in an end-to-end fashion, and fusion spliced together. In fusion-splicing those optical fibers, a core 1a of the optical fiber 1 is joined to a core 2a of the subsequent optical fiber 2 in a state that those cores are axially shifted away from each other. Thus, the axis of the core 1a is shifted, by an offset quantity D, from the axis of the core 2a in splicing them together. Therefore, when light propagates from the optical fiber 1 to the optical fiber 2, the light is attenuated in power at the axis-offset fusion splicing part 1c and reaches the optical fiber 2. Accordingly, a coupling loss occurs at the fusion splicing part. At the fusion splicing part 1c, part of light coming in through the core 1a enters the core 2a, while the remaining part of it enters the clad layer 2b. The light entering the clad layer 2b can not pass through the clad layer 2b, and leaks out of the optical fiber 2. Some part of light is reflected at the fusion splicing part 1c and travels back to the core 1a of the optical fiber 1, however, a quantity of this light is extremely small. Here, in the case where splicing parts of the optical fibers are connected together with a connector, the quantity of reflected light at a connecting part is -25 dB. When splicing parts of the optical fibers are fusion spliced as shown in this embodiment of the present invention, the quantity of the reflected light at a fusion splicing part is less than -75 dB.
D. Mercuse describes in his paper "Loss Analysis of single mode fiber splices", Bell Syst. Tech. J. 56 (1977) 703, that a relation of the offset quantity D and the coupling loss when the fibers are fusion spliced is mathematically expressed by

$$\text{Coupling loss} = -10 \log\{[2W_1 W_2/(w_1{}^2 + w_2{}^2)]^2 \times$$

$$\exp [-D^2/ (w_1{}^2 + w_2{}^2)]\}$$

where

D : offset quantity [μm]
$W_1$ : spot size of one of the optical fibers spliced (1/2 of MFD) [μm]
$W_2$: spot size of the other optical fiber spliced (1/2 of MFD) [μm]

Generally, in a case where optical fibers are fusion spliced, a coupling loss at a fusion splicing part is not more than 0.25 dB. If such the optical fibers are fusion spliced in such a manner that core axes of the optical fibers are shifted apart from each other or the optical fibers which are different in core diameter are fusion spliced together, the coupling loss can be increased. In this case, the substantial coupling loss may be not less than 0.5 dB.
The above-mentioned expression teaches that the light power loss may be not less than 5dB at the fusion splicing part if the offset quantity D is not less than 3/4 times the mode field diameter.
In Fig. 1, optical fibers 1 to n are sequentially spliced at "n-1" number of fusion splicing parts such that the optical fiber 2 is joined end to end and fusion spliced to the optical fiber 1 to be non-reflection terminated, while being axially shifted apart from each other (fusion splicing part 1c), the optical fiber 3 is joined end to end and fusion spliced to the optical fiber 2, while being axially shifted apart from each other (fusion splicing part 2c), and so on. If the coupling loss is 5dB at one fusion splicing part, the back reflection light is attenuated 5dB at the fusion splicing part when it travels from the optical fiber 2 to the optical fiber 1. Therefore, the back reflection light undergoes the coupling loss of 10dB when it travels forward and backward passing through one fusion splicing part. This indicates that the reflection attenuation quantity is increased 10dB. Here, the MFD of the SN optical fiber is approximately 10μm. Accordingly, if the offset quantity at the fusion splicing part is approximately 7.5μm, the back reflection light can be attenuated by about 10dB at one fusion splicing part. Therefore, if a plurality of fusion splicing parts where the optical fibers are joined and fusion spliced in an end-to-end fashion while being axially shifted from each other are provided, the coupling loss will be more increased.
It is assumed that the reflection attenuation quantity is 40dB at a non-reflection treating part 10 of the terminal part of the final optical fiber of those serially spliced optical fibers. In a case where one axis-offset fusion splicing part is provided, viz., in the case of Fig. 1, the optical fiber 2 is the final optical fiber and the terminal part of the optical fiber 2 is non-reflection-treated, the reflection attenuation quantity of 50dB is obtained. In a case where two axis-offset fusion splicing parts are provided, viz., in the case of Fig. 1, the optical fiber 3 is the final optical fiber and the terminal part of the optical fiber 3 is non-reflection-treated, the reflection attenuation quantity of 60dB is obtained. Accordingly, the reflection attenuation quantity of 70dB or larger can be secured if three or more number of the fusion splicing parts are provided. A satisfactory reflection attenuation quantity is more effectively achieved if the coupling loss at one fusion splicing part is selected to be at least 5dB. The lengths of the optical fibers 2, 3, .., n, which are subsequent to the optical fiber 1, may be properly selected, and may be selected in consideration of the efficiency of fusion splicing work.

The non-reflection treating part 10 of the final optical fiber may take an appropriate structure. In an example of the non-reflection treatment, the terminal part of the final optical fiber may be covered with a polymer. This non-reflection treatment is disclosed in Japanese Patent Unexamined Publication No. Hei.9-5545. In the treatment, the end part of the optical fiber is cut or ruptured by pressure, and is carried out by burying the end part of the optical fiber in an ethylene-vinyl acetate copolymer or the modified product or the mixture heated at equal to or above the melting point and solidifying under cooling. In this structure of the non-reflection treating part in which the leading end part of the optical fiber is covered with polymer, the reflection attenuation of light attains to a value of about 40dB.

Another example of the non-reflection treatment is based on the spherical surface shaping process. It is disclosed also in Japanese Patent Unexamined Publication No. Hei. 8-262229 and Japanese Patent Unexamined Publication No. Hei. 11-72622. In the non-reflection treatment, the terminal part of the optical fiber is spherically shaped by heating and melting terminal part. The spherical surface may also be shaped by heating the terminal part so as to diffuse dopant thereinto. In the non-reflection treatment, the reflection attenuation quantity attains to a value of about 60dB.

Other structures of the non-reflection treating part are a structure in which the end face of the optical fiber is obliquely polished, a structure in which the end part of the optical fiber is obliquely ruptured by pressure and coated with resin whose refractive index is approximate to that of the core of the optical fiber, a structure in which the end part of the optical fiber is bent, and others.

In the present invention, any of those structures of the non-reflection treating part may be employed for the non-reflection treatment applied to the final optical fiber. In addition to the non-reflection treatment, the coupling loss at the fusion splicing part further contributes to the increase of the reflection attenuation. Therefore, a desired quantity of the reflection attenuation can easily be secured.

Fig. 2 is a diagram showing a second embodiment of a non-reflection optical fiber termination according to the present invention. In the figure, like or equivalent portions are designated by like reference numerals in Fig. 1. In the figure, reference numerals 11, 12, ..., 1n designate optical fibers.

In the embodiment, the core diameter of the optical fiber 11, which is to be fusion spliced to the optical fiber 1, is different from that of the optical fiber 1. In this instance, the optical fiber 1 is a single mode optical fiber of 5μm in core diameter, and the optical fiber 11 is a multi-mode optical fiber of 50μm in core diameter. When light propagates from the optical fiber 1 to the optical fiber 12, little or nothing of the coupling loss is present at the fusion splicing part lc. At the fusion splicing part 1c, part of the back reflection light enters from the optical fiber 11 of the large core diameter to the optical fiber 1 of the small core diameter, while the remaining part of the back reflection light enters the clad layer. As a result, coupling loss arises, and hence the back reflection light is attenuated. When a multiple of fusion splicing parts are used, optical fibers which are different in core diameter are spliced together also at the subsequent fusion splicing part. In the instance illustrated in Fig. 2, the core diameter of the optical fiber 12 is smaller than that of the optical fiber 11. The core diameter of the optical fiber 12 may be selected to be larger than that of the optical fiber 11, as a matter of course. The coupling loss of light may be caused when light travels from the optical fiber of the large core diameter to the optical fiber of the small core diameter. The terminal end of the final optical fiber of those serially spliced optical fibers is treated so that light is not reflected thereat. Also in this embodiment, the optical fibers 11, 12, ..., 1n, which are subsequent to the optical fiber 1, maybe properly selected in length, and in the length selection, the efficiency of fusion splicing work may be taken into account.

The optical fiber of this embodiment may be a ring core optical fiber having a ring-like large refractive index, as shown in Fig. 3. It is readily understood that the ring core optical fiber may also be used in the first embodiment. In Fig. 3, the abscissa represents the radius $r$ measured from the center $O$, and the ordinate represents a refractive index difference $\Delta$n.

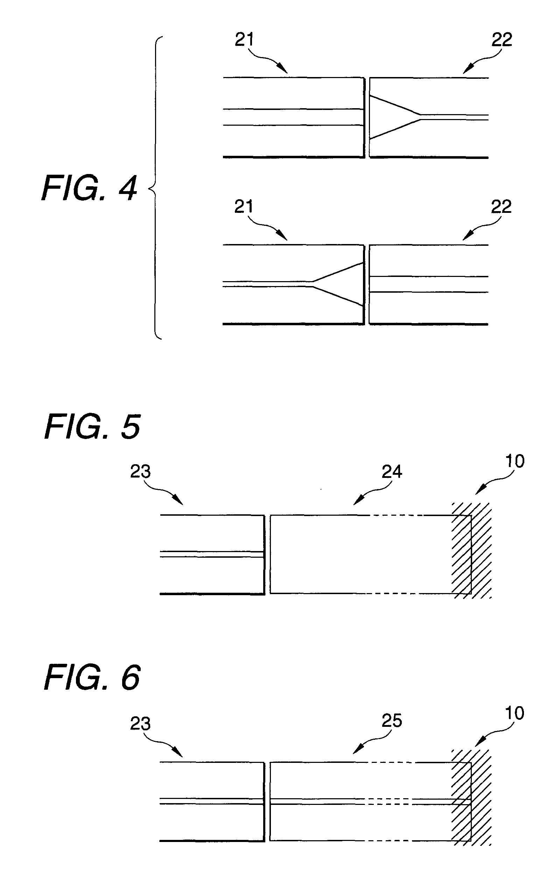

Figs. 4A-B are respectively diagrams showing a third embodiment of a non-reflection optical fiber termination according to the present invention. In the figure, 21 and 22 are optical fibers. The optical fiber 22 is fusion spliced to the optical fiber 21 in the terminal end direction.

In this embodiment, the terminal part of one of the optical fibers at the fusion splicing part is configured such that the core diameter thereof is enlarged toward its end face. The core diameter may be enlarged by heating the end part of the optical fiber and diffusing dopant thereinto.

In the case of Fig. 4A, the core diameter of the end part of the optical fiber 22 is enlarged toward the end face thereof. When light travels from the optical fiber 21 to the optical fiber 22, little or nothing of the coupling loss arises. When light travels from the optical fiber 22 to the optical fiber 21, part of the light goes into the core of the optical fiber 21, while the remaining part of the light goes into the clad thereof, giving rise to the coupling loss.

In the Fig. 4B case, the core diameter of the end part of the optical fiber 21 is enlarged toward the end face thereof. When light travels from the optical fiber 22 to the optical fiber 21, little or nothing of the coupling loss arises. When light travels from the optical fiber 21 to the optical fiber 22, the coupling loss arises.

Thus, in this embodiment, the coupling loss occurs in one way of light traveling, as in the second embodiment. In Figs. 4A-B, the optical fiber 21 may be the optical fiber 1 described in connection with Fig. 1 or any of the optical fiber 2 and the subsequent ones, which is also described in Fig. 1. The optical fiber 22 is fusion spliced to the optical fiber 21. Also in this embodiment, the terminal end of the final optical fiber is non-reflection-treated. The optical fibers which are subsequent in connection to the optical fiber 1 may be properly selected in length, and in the length selection, the efficiency of fusion splicing work may be taken into account.

Fig. 5 is a diagram showing a fourth embodiment of a non-reflection optical fiber termination according to the present invention. In the figure, like or equivalent portions are designated by like reference numerals in Fig. 1. In the figure, reference numeral 23 is an optical fiber, and numeral 24 is a coreless optical fiber 24.

In the embodiment, the coreless optical fiber 24 is used for the final optical fiber as the optical fiber to be non-reflection-treated. It is preferable that a refractive index of the coreless optical fiber 24 is nearly equal to or smaller than that of the core of the optical fiber 23. Light coming from the optical fiber 23 reaches the terminal end of the coreless optical fiber 24 while leaking outside during the course of its propagation through the optical fiber. The light reaching the terminal end is little reflected at the non-reflection treating part 10, so the back reflection-light therefrom is very small in amount. Further, the back reflection light leaks outside when it returns through the coreless optical fiber 24, and therefore the light enter ing the core of the optical fiber 23 is extremely small in amount. If the outer surface of the coreless optical fiber 24 is covered with a material whose refractive index is larger than that of the coreless optical fiber 24, light passing through the coreless optical fiber 24 is easy to leak outside. The result is to reduce the back reflection light in amount.

The coreless optical fiber 24 of this embodiment may be used for the final optical fiber in each of the first to third embodiments. If required, it may be fusion spliced to the optical fiber 1 in any of those embodiments. Incidentally, a length of the coreless optical fiber 24 is selected so that a desired attenuation quantity is obtained.

Fig. 6 is a diagram showing a fifth embodiment of a non-reflection optical fiber termination according to the present invention. In the figure, like or equivalent portions are designated by like reference numerals in Figs. 1 and 5. In the figure, reference numeral 25 is an optical fiber having large attenuation.

In this embodiment, the optical fiber 25 having large attenuation is used for the final optical fiber as the optical fiber to be non-reflection terminated. The optical fiber having large attenuation may be an optical fiber containing much OH base. The OH base contained absorbs light propagating through the optical fiber 25, thereby giving rise to a transmission loss of the light. Accordingly, the light is attenuated before it reaches the non-reflection treating part 10, and then the non-reflection treating part 10 further attenuates the light. As a result, the back reflection light is extremely small in amount. The back reflection light suffers a transmission loss during the course of its returning to the optical fiber 25, and therefore an amount of the light entering the core of the optical fiber 23 is considerably small. The optical fiber 25 may be an optical fiber whose transmission loss is increased, such as an optical fiber in which an impurity exhibiting large light attenuation, e.g., a heavy metal, is doped into the core. Generally, a transmission loss of a single mode optical fiber is not more than 0.00036 dB/m. Atransmission loss of the optical fiber in which heavy metal is doped into the core for example is a range of 1.0 to 2.5 dB/m. A length of the optical fiber 25 is selected so as to produce a desired light attenuation effect.

The optical fiber 25 to be non-reflection terminated in this embodiment may be used for the final optical fiber in each of the first to third embodiments. If required, it may be fusion spliced to the optical fiber 1 to be non-reflection terminated in any of those embodiments.

The optical fibers subsequent to the fusion splicing part are bent in advance . For example, it is bent with an appropriate radius. If so done, light entering the clad is easy to leak out of the optical fiber. A curvature of the bending is selected to such an extent as not to satisfy the condition allowing light to reflect at the interface between the core and the clad. If so selected, part of the light propagating through the clad is easy to leak outside. However, the bending of the optical fibers at a curvature smaller than the above one will suffice for easy leaking of the light entering the clad.

As seen from the foregoing description, in the non-reflection optical fiber termination of the invention, light is attenuated by the coupling loss and the transmission loss in addition to the non-reflection treating part. Therefore, the non-reflection optical fiber termination of the invention can provide a considerably large reflection attenuation quantity, which cannot be attained by the related art non-reflection treatment. As a result, the back reflection light is more effectively reduced.

## Claims

1. A non-reflection optical fiber termination comprising:

   a first optical fiber;
   a second optical fiber coupled to an end portion of said first fiber at one end portion, and non-reflection-treated at the other end portion; and
   a fused splicing part where the end portion of said first optical fiber and the one end portion of said second optical fiber are fusion spliced together so as to substantially have a coupling loss.

2. The non-reflection optical fiber termination according to claim 1, wherein in said fusion splicing part, said first and second optical fiber are fusion spliced in a state that a core axis of said first optical fiber is shifted away from that of said second optical fiber.

3. The non-reflection optical fiber termination according to claim 2, wherein an offset quantity between the core axes of said first and second optical fibers is not less than 3/4 times a mode field diameter.

4. The non-reflection optical fiber termination according to claim 1, wherein in said fusion splicing part, said first and second optical fibers are different in core diameter.

5. The non-reflection optical fiber termination according to claim 1, wherein in said fusion splicing part, one of said first and second optical fibers is expanded in core diameter.

6. The non-reflection optical fiber termination according to claim 1, wherein said second optical fiber is a third optical fiber configured to have substantially a transmission loss.

7. The non-reflection optical fiber termination according to claim 6, wherein said third optical fiber is an optical fiber not including a core.

8. The non-reflection optical fiber termination according to claim 6, wherein said third optical fiber greatly attenuates optical power of light propagating therethrough.

9. A non-reflection optical fiber termination comprising:

   a first optical fiber;
   a second optical fiber having substantially a transmission loss, said second optical fiber coupled to an end portion of said first fiber at one end portion and non-reflection-treated at the other end portion; and
   a fused splicing part where the end portion of said first optical fiber and the one end portion of said second optical fiber are fusion spliced together.

10. The non-reflection optical fiber termination according to claim 9, wherein said second optical fiber is an optical fiber which greatly attenuates optical power of light propagating therethrough.

11. The non-reflection optical fiber termination according to claim 9, wherein said second optical fiber is an optical fiber not including a core.

12. A method of manufacturing a non-reflection optical fiber termination comprising:

   fusion splicing a first optical fiber and a second optical fiber together so as to substantially have a coupling loss; and
   non-reflection treating the second optical fiber.

13. The method of manufacturing the non-reflection optical fiber termination according to claim 12, said fusion splicing step fusion splices the first and second optical fibers together while being axially shifted apart form each other.

14. The method of manufacturing the non-reflection optical fiber termination according to claim 12, wherein said first and second optical fibers are different in core diameter at a fusion splicing part.

15. The method of manufacturing the non-reflection optical fiber termination according to claim 12, wherein one of said first and second optical fibers is expanded in core diameter at a fusion splicing part.

16. The method of manufacturing the non-reflection optical fiber termination according to claim 12, wherein said second optical fiber has substantially a transmission loss.

17. A method of manufacturing a non-reflection optical fiber termination comprising:

   fusion splicing a first optical fiber and a second optical fiber together; and
   non-reflection treating the second optical fiber.

18. The method of manufacturing the non-reflection optical fiber termination according to claim 17, wherein said second optical fiber is a third optical fiber configured to have substantially a transmission loss.

19. The method of manufacturing the non-reflection optical fiber termination according to claim 18, wherein said third optical fiber is an optical fiber not including a core.

20. The method of manufacturing the non-reflection optical fiber termination according to claim 18, wherein said third optical fiber greatly attenuates optical power of light propagating therethrough.

# FIG. 1

# FIG. 2

# FIG. 3

FIG. 4

21      22

21      22

FIG. 5

23      24      10

FIG. 6

23      25      10